# DEMANDE DE BREVET EUROPEEN

(11) **EP 1 561 374 A1**
(43) Date de publication de la demande: **10.08.2005**
(21) Numéro de dépôt: 04290250.2
(22) Date de dépôt: 30.01.2004
(51) Int. Cl.: A01G 9/04

(54) **Ensemble vegetal a socle formant couvercle**

(71) Demandeur: Vittoz, Fabien Martial, 58300 Sougy sur Loire (FR)
(72) Inventeur: Vittoz, Fabien Martial, 58300 Sougy sur Loire (FR)
(74) Mandataire: Thibon-Littaye, Annick

(57) **Abrégé**

L'invention concerne un ensemble végétal comprenant un récipient rigide à parois pleines (2) qui contient une masse de terreau (3), dans laquelle sont disposées des plantes (4), caractérisé en ce qu'il comporte un socle (1) apte à former une plaque de fermeture qui recouvre entièrement le récipient (2). Avantageusement, le socle (1) comporte des moyens de maintien des parois latérales du récipient (2) qui constituent également des moyens de maintien du socle (1) en position de couvercle sur le récipient (2).

## Description

La présente invention concerne les ensembles végétaux, en particulier floraux, principalement dans les cas où ils sont conçus pour la culture de plantes qui sont vendues à l'état de maturité et de semi-maturité, prêtes à être replantées dans des récipients tels que des bacs, des jardinières ou des pots.

Pour réaliser des décorations florales, on peut acheter des plantes qui sont à l'état de maturité ou de semi-maturité et les placer ensuite dans un bac, une jardinière ou un pot. Pour ce faire, il faut sortir les plantes ou ensembles de plantes avec leur motte de terreau des pots ou godets qui les contiennent, placer du terreau que l'on a extrait d'un sac dans le récipient choisi et replanter ensuite les plantes ou ensembles de plantes dans le terreau en aménageant des trous correspondant aux mottes de terreau dans la masse de terreau qui a été déposée dans le récipient.

Cette opération est salissante parce que l'on doit manipuler des masses de terreau à la main et on risque d'en laisser tomber à l'extérieur du récipient, ce qui est particulièrement gênant lorsque l'on est dans un appartement. Par ailleurs, ces différentes opérations nécessitent une manipulation assez longue et complexe car il faut ménager à chaque fois dans la masse de terreau déposée dans le récipient des trous dont la forme correspond aux éléments à replanter. Or, le terreau est friable et il est difficile de le compacter pour que les parois des trous que l'on veut former soient maintenues suffisamment longtemps pour que l'on puisse replanter les plantes.

Le fait d'utiliser des ensembles végétaux dans lesquels les plantes sont à l'état de maturité ou de semi-maturité permet aux particuliers d'éviter d'avoir à faire pousser ces plantes à partir de semis ou de plantations pendant une période relativement longue, ce qui pose un problème de stockage car les éléments floraux ne sont pas encore décoratifs et ne peuvent être disposés dans un appartement. De plus, le fait de cultiver les plantes à domicile juqu'à ce qu'elles aient obtenu l'état de maturité demande des soins précis pendant une longue période de temps et n'est pas fiable, certains éléments pouvant dépérir avant d'arriver à l'état de maturité et devant alors être remplacés.

La présente invention propose un ensemble végétal à mettre en oeuvre pour des plantes à vendre à l'état de maturité ou de semi-maturité, conçu pour que l'acheteur puisse facilement et rapidement les replanter dans un bac ornemental définitif, sans risquer que le terreau tombe en dehors de ce bac et vienne salir l'endroit où l'on réalise la décoration florale. Elle a pour objet un tel ensemble végétal qui comprend un récipient ouvert pour contenir des plantes en culture dans une masse de terreau, qui est notamment remarquable en ce qu'il comporte une pièce de socle séparable dudit récipient pour constituer alternativement un socle support dudit récipient se fixant à celui-ci sous son fond et un couvercle venant en fermeture complète dudit récipient par fixation sur son bord supérieur.

Dans les formes de mise en oeuvre de l'invention, le récipient contenant le terreau dans lequel sont plantés les végétaux est du type à double enveloppe. En pratique, il est préférentiellement constitué d'un récipient proprement dit, en enveloppe externe, dont les parois latérales sont pleines, et d'une barquette interne, à parois latérales ajourées, qui s'adapte à l'intérieur du récipient externe. Conformément à l'invention, l'ensemble végétal est alors avantageusement réalisé, pour ce qui concerne le récipient proprement dit et sa barquette interne, comme il a été décrit dans le brevet français publié sous le numéro 2758687. Néanmoins, il existe aussi des situations où une barquette interne à parois largement ajourées mais rigides n'est pas nécessaire, quand par exemple la masse de terreau enrobant les racines des plantes en culture présente d'elle-même une cohésion suffisante pour permettre son extraction hors du récipient externe principal.

Grâce à l'invention, la réalisation d'une décoration florale devient très facile et sans risque de salissure. L'invention prévoit ainsi d'extraire la masse de terreau qui contient les plantes de son récipient (éventuellement dans la barquette interne) et de la mettre en attente ; on place alors le socle sur le récipient de manière à constituer un ensemble totalement fermé et on le place dans le récipient ornemental sur un lit de terreau de telle manière qu'il soit au niveau désiré ; on place ensuite du terreau tout autour du récipient, ce qui peut se faire facilement et sans risque de mettre du terreau à l'extérieur du récipient ornemental ni à l'intérieur du récipient, par exemple en versant le terreau directement d'un sac de terreau et en égalisant ensuite le terreau autour du récipient muni de son couvercle. Finalement, on compacte un peu le terreau autour du récipient de manière à ce qu'il reste en forme lorsque l'on enlève le récipient en laissant un emplacement dont la forme correspond à la masse de terreau contenant les plantes (éventuellement avec ladite barquette interne) qui avait été mise en attente et qui peut y être placée sans problème.

Avantageusement, le socle comporte des moyens de maintien coopérant avec les parois latérales du récipient autour de son fond et ces moyens constituent également des moyens de maintien du socle en position de couvercle sur le récipient en coopération avec son bord supérieur autour de son ouverture opposée audit fond. Le fait de maintenir les parois latérales du récipient permet d'éviter que celles-ci ne se déforment sous la pression du terreau, en particulier quand on compacte le terreau autour de ce récipient. Avantageusement, ces moyens de maintien du récipient permettent également de maintenir le socle en bonne position sur le récipient pendant cette opération de mise en place du terreau dans le bac ornemental.

De préférence, l'action de maintien assurant la fixation de la pièce séparable du récipient alternativement en tant que socle sur lequel repose ledit récipient garni de terreau et de plantes en culture et en tant que couvercle de fermeture de son ouverture supérieure s'exerce dans les deux cas par effet de clipsage élastique. Conformément à l'invention, on prévoit en particulier à cette fin, de constituer dans ladite pièce des éléments en saillie d'une plaque principale qui viennent en appui sur les parois latérales du récipient au voisinage de son fond, en face extérieure de celles-ci, quand ladite pièce forme socle, et qui viennent en appui sur les parois latérales sur leur face interne en rive autour de l'ouverture supérieure du récipient quand ladite pièce forme couvercle. Un appui élastique de clipsage se réalise aisément, de manière en soi connue, lorsque les pièces de l'ensemble sont fabriquées en matière plastique, en appliquant une technique quelconque de moulage.

En combinaison avec ces dispositions, il est avantageux que les parois latérales du récipient soient inclinées, évasées du fond vers l'ouverture supérieure. De telles formes sont déjà décrites dans le document du brevet déjà cité. Mais conformément à la présente invention il est souhaitable de fixer la pente des parois évasées en liaison avec leur épaisseur et avec leur hauteur de manière que ce soit les mêmes éléments en saillie de la plaque principale de la pièce de socle qui assurent la fixation par clipsage alternativement sur l'extérieur du récipient dans le cas d'une utilisation en socle et à l'intérieur dans le cas d'une utilisation en couvercle. A cet effet, de tels éléments en saillie sont avantageusement constitués par un rebord interne fragmenté qui facilite la mise en place et favorise l'effet de clipsage. L'invention prévoit d'ailleurs de profiter de la présence d'un tel rebord interne fragmenté pour livrer passage à de l'eau d'arrosage en excès s'échappant du terreau (quand notamment le récipient à parois latérales pleines comporte un fond percé de trous d'évacuation d'eau), l'eau étant alors recueillie dans une rigole formée par le socle autour du fond du récipient jusqu'à un rebord externe.

Selon un mode de réalisation préféré de l'invention, le socle comporte un rebord intérieur qui vient se placer à l'intérieur du récipient contre les bords supérieurs des parois latérales de ce dernier. Cette disposition permet d'éviter que les parois latérales du récipient ne se déforment vers l'intérieur sous la pression du terreau. Avantageusement, ce rebord intérieur du socle est fragmenté, ce qui permet de réduire la quantité de matière utilisée pour réaliser le socle.

Selon une autre caractéristique de l'invention, le socle comporte un rebord extérieur qui entoure les parois latérales du récipient lorsque ledit socle est utilisé en couvercle. De cette manière, on assure qu'aucune particule de terreau ne pénétrera dans le récipient. De plus, il est avantageux que dans sa fonction de socle, le même rebord extérieur retienne les excédents d'eau.

Selon encore une autre caractéristique de l'invention, le socle comporte des moyens de fixation sur le bord du récipient. Ceci permet de faciliter l'enlèvement du récipient lorsque l'ensemble du terreau a été réparti autour de lui dans le récipient ornemental. Il suffit de saisir les bords du socle pour extraire le récipient du bac ornemental.

Selon un mode de réalisation particulièrement avantageux de l'invention, le socle comporte à la fois un rebord intérieur et un rebord extérieur, le récipient rigide comporte des parois latérales inclinées et les bords supérieurs de ces parois latérales sont serrées entre les deux rebords intérieur et extérieur du socle de manière à réaliser une fixation par clipsage du socle sur le récipient.

Selon une autre caractéristique de l'invention, le socle comporte des moyens de fixation sur le fond du récipient. Grâce à cette disposition, le socle est solidarisé avec le récipient sur le lieu de vente ; cela facilite la manipulation d'une part et, d'autre part, fournit une meilleure assise au récipient dont la stabilité est améliorée, ce qui est particulièrement intéressant sur les lieux de vente.

Selon un mode de réalisation de l'invention, le fond du récipient comporte des trous d'évacuation d'eau et le socle comporte des tétons qui viennent s'engager dans certains de ces trous d'évacuation de l'eau. Dans ce cas, le socle permet de récupérer l'eau qui pourrait s'écouler par le fond du récipient, par exemple pendant le transport par l'utilisateur. Il est à noter que de tels tétons peuvent avantageusement pénétrer par clipsage dans les trous du récipient et contribuer ainsi à la fixation du socle sur le fond du récipient. En pratique, on obtient avantageusement que la pièce faisant alternativement socle et couvercle se fixe au récipient par de tels tétons en coopération avec les éléments en saillie du rebord intérieur quand elle est utilisée en socle, et qu'elle se fixe au récipient en enserrant entre rebord intérieur et rebord extérieur de la pièce le rebord entourant l'ouverture supérieure du récipient quand elle est utilisée en couvercle.

L'invention s'applique en particulier à des ensembles végétaux tels que décrits dans le brevet français 97 01013 du même déposant et selon lequel la masse de terreau comprenant les plantes à l'état de maturité ou de semi-maturité est disposée dans une barquette interne rigide à parois ajourées qui a la même forme et les mêmes dimensions que le récipient et qui est disposée avec un faible écartement dans ce récipient.

Dans ce cas, il est beaucoup plus facile d'extraire l'ensemble végétal du récipient, cet ensemble végétal étant placé dans le bac ornemental avec la barquette interne à parois ajourées. Dans ce cas, la masse de terreau contenant les plantes est beaucoup plus rigide et ne risque pas de s'émietter pendant sa mise en attente.

L'invention sera maintenant plus complètement décrite dans le cadre de caractéristiques préférées et de leurs avantages, en faisant référence aux figures des dessins annexés qui les illustrent et dans lesquelles:
- la figure 1 représente un exemple de réalisation d'ensemble végétal selon l'invention lorsqu'il est prêt à la vente ;
- la figure 2 représente l'ensemble du récipient et du socle en position de couvercle ;
- la figure 3 représente, en perspective, le récipient ;
- la figure 4 représente, en perspective, une barquette interne qui contient la masse de terreau et les plantes ;
- la figure 5 représente, en perspective, le socle en position de socle ;
- la figure 6 est une coupe transversale du récipient posé sur le socle ;
- la figure 7 est une vue en coupe correspondante, le socle étant placé en position de couvercle sur le récipient ;
- et la figure 8 représente, en perspective, le bac ornemental pendant sa préparation.

L'invention est décrite à l'aide d'un exemple de réalisation dans lequel, conformément au brevet français précité, la masse de terreau contenant les plantes à l'état de maturité ou de semi-maturité est disposée dans une barquette interne à parois ajourées disposée dans le récipient. Il est évident que l'invention s'applique à tous les types d'ensembles végétaux, en particulier ceux qui ne comportent qu'un récipient à parois pleines qui contient la masse de terreau avec les plantes.

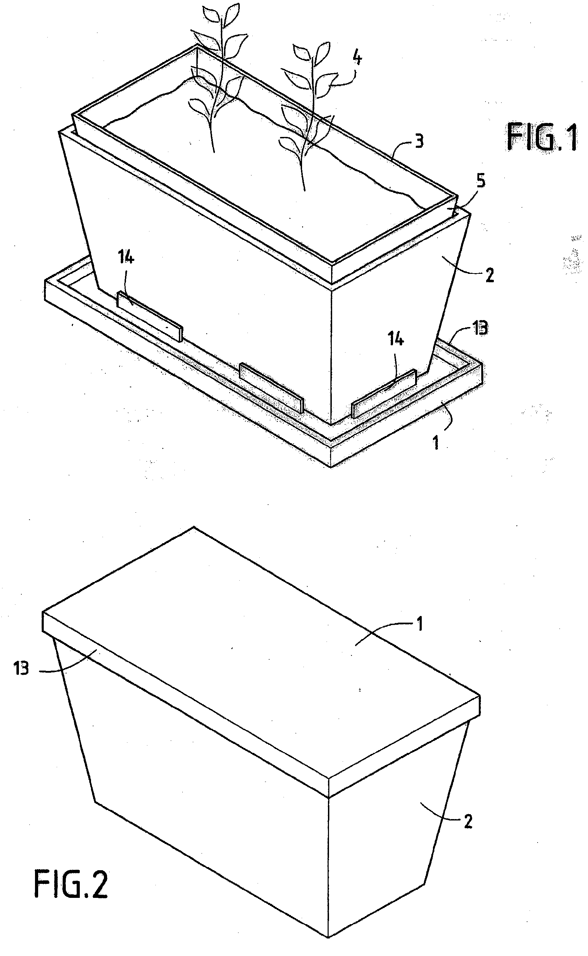

On voit, sur la figure 1, un socle 1 sur lequel est posé un récipient à parois pleines 2. Ce récipient contient une masse de terreau 3 dans laquelle sont disposées des plantes 4 qui sont, de préférence, à l'état de maturité ou de semi-maturité. La masse de terreau 3 est disposée dans une barquette intérieure 5 qui a les mêmes dimensions que le récipient 2 et qui est disposée dans ce dernier en laissant un faible écartement entre les deux.

On voit, sur la figure 2, le récipient 2 duquel on a extrait la masse de terreau 3 avec la barquette 5 la contenant. Le socle 1 a été placé sur le récipient 2 de manière à constituer pour lui un couvercle.

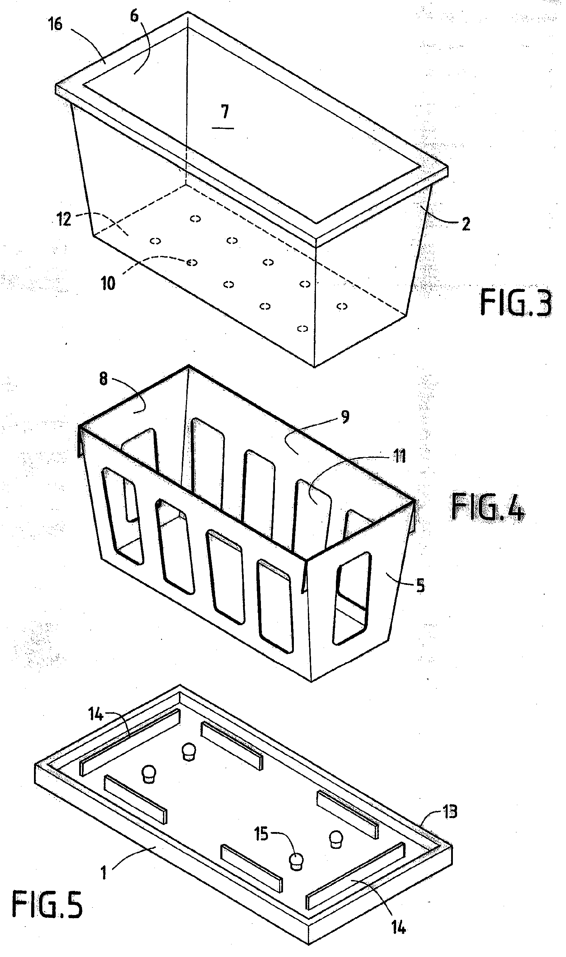

La figure 3 représente, en perspective, le récipient 2 dont les parois latérales 6 et 7 sont inclinées de telle manière que le récipient 2 soit évasé vers le haut, ce qui facilite l'extraction de la masse de terreau contenant les plantes. Le récipient 2 comporte dans son fond 12 des trous d'évacuation d'eau 10.

La figure 4 représente la barquette 5. Elle a sensiblement la même forme que le récipient 2. Elle est également rigide, mais ses parois latérales 8 et 9 sont fortement ajourées. De larges ouvertures 11 permettent l'expansion de l'ensemble végétal lorsqu'il est disposé dans la masse de terreau du bac ornemental.

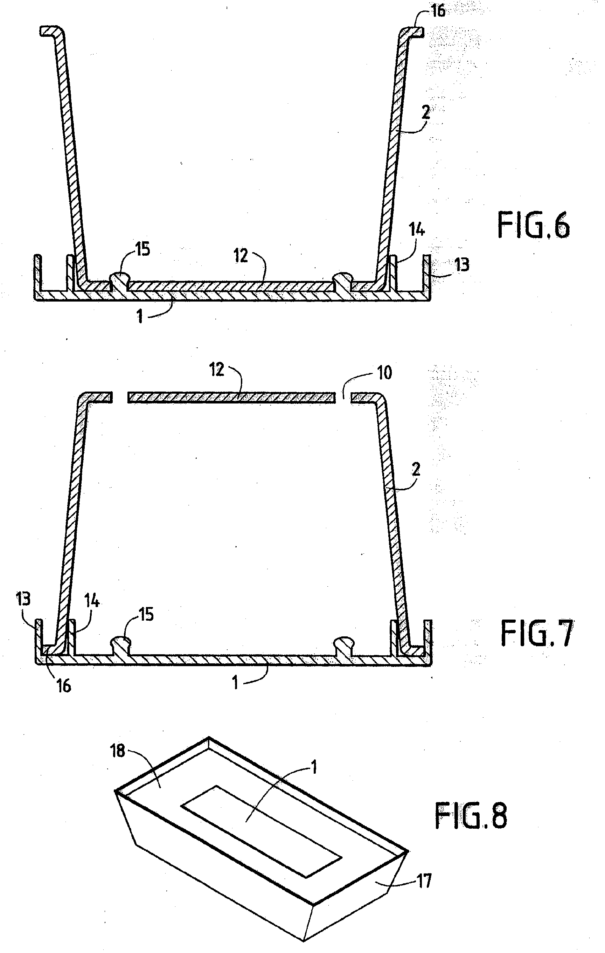

La figure 5 représente le socle en position de socle vu de dessus. Le socle 1 comporte un rebord extérieur 13 qui vient entourer le bord supérieur du récipient 2 lorsqu'il se trouve en position de couvercle comme représenté sur la figure 2. Le socle 1 comporte par ailleurs un rebord intérieur 14 qui est fragmenté en plusieurs sections et qui vient s'appuyer contre la face intérieure des parois latérales 6 et 7 du récipient 2 lorsque le socle est en position de fermeture du récipient 2. Les éléments constituant le rebord extérieur 14 servent à maintenir en position les parois 6 et 7 lorsque l'on tasse le terreau autour du récipient 2. Enfin, le socle 1 comporte des tétons 15 qui s'engagent dans certains des trous 10 du bac 2 lorsque le socle 1 est placé sous le bac 2 en tant que socle. Ceci permet d'assurer la fixation du bac 2 sur le socle 1, en particulier dans les lieux de vente.

Sur les figures 6 et 7, on voit que le récipient 2 comporte un petit rebord horizontal supérieur 16 qui facilite sa préhension et qui vient s'engager entre les deux rebords extérieur 13 et intérieur 14 et s'y trouve ainsi fixé par serrage le long du rebord intérieur 14 lorsqu'il est engagé jusqu'au fond de l'espace existant entre les deux rebords 13 et 14.

Sur la figure 6, on peut également voir que, lorsque le socle 1 est en position de socle, du fait du profil évasé conique du récipient 2, ce dernier est maintenu en position sur le socle 2 par le rebord interne 14 du socle 1, qui entoure les parois latérales 6 et 7 du récipient 2.

On voit sur la figure 8, un bac ornemental 17 dans lequel on a placé le récipient 2 muni du socle 1 en position de couvercle sur un lit de terreau 18. Il ne reste plus qu'à disposer du terreau tout autour du récipient 2 en le tassant en particulier le long des bords du récipient 2. Lorsque l'on enlèvera le récipient 2, en le prenant éventuellement par les bords du couvercle 1, il restera au milieu du bac ornemental 17 un espace où l'on pourra placer les mottes de terreau contenant les plantes ou les barquettes 5.

On voit que l'invention permet de réaliser une décoration florale dans un bac ornemental de manière très simple et très rapide sans risques de salissures par le terreau. En particulier, les trous nécessaires pour replanter les élément floraux sont obtenus avec une bonne précision. De plus, la fixation du récipient sur le socle facilite le stockage et le transport des éléments végétaux selon l'invention et la fixation du socle en position de couvercle sur le récipient facilite l'extraction du récipient du bac ornemental lorsque le remplissage en terreau est terminé.

Enfin l'ensemble du récipient 2 avec son socle 1 en position de couvercle constitue une boîte de rangement qui peut être utilisée pour d'autres usages.

## Revendications

1. Ensemble végétal comprenant un récipient (2) ouvert pour contenir des plantes en culture dans une masse de terreau (3), **caractérisé en ce qu'**il comporte une pièce de socle (1) séparable du récipient (2) pour constituer alternativement un socle support dudit récipient se fixant à celui-ci sous son fond et un couvercle venant en fermeture complète du récipient (2) par fixation sur son bord supérieur.

2. Ensemble végétal selon la revendication 1, **caractérisé en ce que** le socle (1) comporte des moyens de maintien (14) des parois latérales (6, 7) du récipient (2) qui constituent également des moyens de maintien du socle (1) en position de couvercle sur le récipient (2).

3. Ensemble végétal selon la revendication 2, **caractérisé en ce que** le socle (1) comporte un rebord intérieur (14) qui vient se placer à l'intérieur du récipient (2).

4. Ensemble végétal selon la revendication 3, **caractérisé en ce que** le rebord intérieur (14) du socle (1) est fragmenté.

5. Ensemble végétal selon l'une quelconque des revendications 1 à 5, **caractérisé en ce que** le socle (1) comporte un rebord extérieur (13) qui entoure les parois latérales (6, 7) du récipient (2).

6. Ensemble végétal selon l'une quelconque des revendications précédentes, **caractérisé en ce que** le socle (1) comporte des moyens de fixation (13, 14) sur le bord du récipient (2).

7. Ensemble végétal selon les revendications 3 et 5, **caractérisé en ce que** le récipient (2) comporte des parois latérales inclinées (6, 7) et **en ce que** les bords supérieurs (16) de ces parois latérales (6, 7) sont serrés entre les deux rebords intérieur (14) et extérieur (13) du socle (1) de manière à réaliser une fixation par clipsage du socle (1) sur le récipient (2).

8. Ensemble végétal selon l'une quelconque des revendications précédentes, **caractérisé en ce que** le socle (1) comporte des moyens de fixation (14, 15) sur le fond (12) du récipient (2).

9. Ensemble végétal selon la revendication 8, **caractérisé en ce que** le fond (12) du récipient (2) comporte des trous (10) d'évacuation d'eau et **en ce que** le socle (1) comporte des tétons (15) qui viennent s'engager dans certains de ces trous (10) d'évacuation d'eau.

10. Ensemble végétal selon l'une quelconque des revendications précédentes, **caractérisé en ce que** la masse de terreau comprenant les plantes est disposée dans une barquette interne rigide à parois ajourées (5) qui a la même forme et les mêmes dimensions que le récipient (2) et qui est disposée avec un faible écartement dans le récipient (2).
